# EUROPÄISCHE PATENTSCHRIFT

(11) **EP 0 997 542 B1**
(45) Veröffentlichungstag und Bekanntmachung des Hinweises auf die Patenterteilung: **26.03.2003**
(21) Anmeldenummer: 99119076.0
(22) Anmeldetag: 30.09.1999
(51) Int. Cl.: C22B 34/24, B22F 9/20, B22F 3/10, H01G 9/042

(54) **Niobpulver und Verfahren zu dessen Herstellung**
Niobium powder and method for its production
Poudre de niobium et son procédé d'obtention

(30) Priorität: 13.10.1998 DE 19847012
(43) Veröffentlichungstag der Anmeldung: 03.05.2000
(73) Patentinhaber: H.C. Starck GmbH, 38642 Goslar (DE)
(72) Erfinder: Löffelholz, Josua, Dr., 38685 Langelsheim (DE); Behrens, Frank, 38640 Goslar (DE)
(74) Vertreter: Zobel, Manfred, Dr.

(56) Entgegenhaltungen:
- WO-A-95/32313
- WO-A-98/19811
- WO-A-98/37248
- DE-A- 3 706 853
- GB-A- 489 742
- US-A- 1 728 941

## Beschreibung

Die vorliegende Erfindung betrifft ein für die Kondensatorherstellung geeignetes Niobpulver und ein Verfahren zur Herstellung von Niobpulver durch Reduktion von Nioboxid mittels Erdalkalimetallen und/oder Seltenerdmetallen.

Die Reduktion von Schwermetalloxiden durch Erdalkalimetalle bzw. -hydride ist grundsätzlich bekannt, siehe z.B. US-A 1,728,941, US-A 2,516,863 und US-A 4,687,632. Problematisch ist, daß die Reduktion stark exotherm abläuft. Nach Zündung eines Gemisches des zu reduzierenden Oxids und des Reduktionsmittels läuft die Reaktion weitgehend unkontrolliert innerhalb kürzester Zeit ab, wobei das Reaktionsgemisch auf Temperaturen weit über 1000° aufgeheizt wird. Derartige Reaktionen sind aufgrund des explosionsartig auftretenden hohen Druckes, des Erfordernisses der Abfuhr der Reaktionswärme und der Anforderungen an das Reaktormaterial nur schwer beherrschbar. Insbesondere werden nicht reproduzierbare Produktqualitäten u.a. mit unkontrollierbarer Korngrößenverteilung erhalten. Es ist bisher nicht gelungen, die Reaktion zur Herstellung hochreiner, für die Kondensatoranwendung geeigneter Erdsäuremetallpulver einzusetzen.

Aus WO-A-98/19811 sind Niobpulver für Kondensatoren bekannt, die durch Wasserstoffverspröderung von Niobblöcke hergestellt werden.

Gegenstand der Erfindung ist ein Verfahren zur Herstellung von Niob- und/oder Tantalpulvem durch Reduktion von entsprechenden Niob- und/oder Tantaloxiden mittels Erdalkalimetallen und/oder Seltenerdmetallen, das dadurch gekennzeichnet ist, daß die Reduktion bei kontrollierter Temperatur zweistufig durchgeführt wird, wobei die erste Reaktionsstufe bis zu einer mittleren Zusammensetzung (Nb, Ta)Oₓ mit x = 0,5 bis 1,5 durchgeführt wird und vor der zweiten Stufe das Reduktionsprodukt der ersten Stufe durch Waschen mittels Mineralsäuren von gebildeten Erdalkalioxiden und/oder Seltenerdmetalloxiden sowie gegebenenfalls überschüssigem Erdalkalimetall und/oder Seltenerdmetall befreit wird.

Vorzugsweise wird in der ersten Reduktionsstufe eine Schmelze des Erdalkalimetalls und/oder Seltenerdmetalls vorgelegt und das Oxid derart allmählich in der Schmelze dosiert, daß die Temperatur der ersten Reduktionsstufe 750°C nicht unterschreitet und 950°C nicht überschreitet. Besonders bevorzugt erfolgt die Dosierung derart, daß die Temperatur um nicht mehr als 50°C um eine in dem o.g. Bereich vorgewählte Temperatur schwankt. Besonderes bevorzugt liegt die vorgewählte Temperatur zwischen 750 und 850°C.

Als zu reduzierende Oxide kommen Nb₂O₅, NbO₂ und/oder Ta₂O₅ in Frage, insbesondere bevorzugt ist Nb₂O₅.

Erfindungsgemäß geeignete reduzierende Metalle sind vorzugsweise Magnesium, Calcium, Lanthan und Cer. Magnesium ist besonders bevorzugt.

Obwohl die Reduktion der Erdsäuremetallpulver mittels Erdalkali und/oder Seltenerdmetallen im Prinzip bis zur Erdsäuremetallstufe durchführbar ist, wenn höhere Temperaturen zugelassen sind, wurde gefunden, daß bei den erfindungsgemäß kontrollierten niedrigen Temperaturen die Reduktion offenbar durch gebildetes Erdalkali- und/oder Seltenerdmetalloxid behindert ist, so daß die Erdsäuremetallstufe erst nach Entfernung der gebildeten Oxide erreicht wird.

Um eine möglichst weitgehende Reduktion bereits in der ersten Stufe zu gewährleisten, wird das Oxid unterstöchiometrisch bezüglich der Reduktionsreaktion in die Reduktionsmittelschmelze dosiert.

Zur Vermeidung lokaler Überhitzungen in der Schmelze wird diese vorzugsweise gerührt. Insbesondere im Falle des bevorzugten Einsatzes von Magnesium als Reduktionsmittel müssen lokale, auch kurzfristige Überhitzungen der Schmelze über den Siedepunkt des Magnesiums vermieden werden.

Zur Ableitung der Reaktionswärme ist eine ausreichende Kühlung über die Reaktoroberfläche, in der die Schmelze vorgelegt wird, erforderlich, um eine ausreichende, technisch sinnvolle Dosiergeschwindigkeit des Oxids zu gewährleisten. Andererseits darf die Kühlung über die Oberfläche nicht zum Absinken der Temperatur der Reaktorwand auf unterhalb Schmelztemperatur des Reduktionsmittels führen. Beispielsweise liegt die Schmelztemperatur von Magnesium bei 650°C, von Cer bei 797°C, von Calcium bei 850°C und von Lanthan bei 920°C. Es ist daher dafür Sorge zu tragen, daß die Wärmeabfuhr pro Flächeneinheit der Behälteroberfläche nicht zu groß ist.

Wird ein flüssiges Kühlmedium eingesetzt, so soll der Temperaturunterschied zwischen Kühlmedium und Reduktionstemperatur bevorzugt zwischen 50 und 100 K liegen. Im Falle, daß ein gasförmiges Kühlmedium eingesetzt wird, kann wegen der geringen Wärmekapazität des Gases die Steuerung der Kühlleistung allein über die zugeführte Gasmenge erfolgen.

Wird ein Kühlmedium mit zu hoher Kühlleistung eingesetzt, kann die Steuerung der Kühlleistung über entsprechende Isolierung des Reduktionsbehälters erfolgen.

Vorzugsweise erfolgt die Kühlung derart, daß für die Dosierung je kg/h Niobpentoxid eine Kühloberfläche in Kontakt mit der Schmelze von 0,01 bis 0,1 m², vorzugsweise 0,02 bis 0,08 m², zur Verfügung steht. In diesem Fall gelingt es, die Kühlleistung so zu steuern, daß in der gerührten Schmelze eine hinreichend gleichmäßige Temperatur herrscht.

Die Reduktion erfolgt vorzugsweise unter Inertgas, d.h. insbesondere einer Sauerstoff- und Kohlenstoff-freien Atmosphäre. Als Inertgas sind erfindungsgemäß Edelgase wie Argon oder Stickstoff geeignet.

Aufgrund der nur allmählichen kontinuierlichen oder portionsweisen Zugabe des Niobpentoxids zu der Schmelze des Reduktionsmittels ist eine gleichmäßige Verweilzeit nicht gewährleistet. Zur Vervollständigung der Reaktion und Gewährleistung einer Mindestverweilzeit von 15 Minuten wird das Reduktionsprodukt anschließend noch 15 bis 180 Minuten, bevorzugt 15 bis 30 Minuten, bei 750 bis 900°C getempert.

Danach wird das Reduktionsprodukt auf eine Temperatur von unter 100°C abgekühlt und durch allmähliche Kontaktierung mit Sauerstoff-haltiger Atmosphäre desaktiviert. Anschließend werden die aus dem Reduktionsmittel entstandenen Oxide, und das überstöchiometrisch vorhandene Reduktionsmittel durch Waschen mit Säuren von dem NbOₓ-Pulver abgetrennt. Die bevorzugt eingesetzte Säure ist Schwefelsäure, insbesondere Schwefelsäuren mit einem pH-Wert <1.5. Die Waschung mit Säure kann im Wechsel mit Waschung in Wasser mehrfach wiederholt werden, bis in der Säure kein Magnesium mehr nachweisbar ist. Das abschließende Abwaschen der Säure von dem NbOₓ-Pulver erfolgt so lange, bis keine Schwefelsäure im Wasser mehr nachweisbar ist.

Das erhaltene NbOₓ-Pulver fällt in Form von agglomerierten Primärteilchen an.

Die Primärteilchengröße ist im wesentlichen durch die Teilchengröße des Ausgangsoxides unter Berücksichtigung der Volumenreduktion durch den Sauerstoffentzug und Änderung der Kristallstruktur bestimmt.

Entsprechend der gewünschten Primärteilchengröße wird die Teilchengröße des Ausgangsoxides gewählt. Für die Anwendung des nach der zweiten Reduktionsstufe erhältlichen Erdsäuremetallpulver wird durch entsprechende Mahlung und Siebung des Ausgangsoxides eine Primärteilchengröße von 0,1 bis 1µm angestrebt

Die erfindungsgemäße erste Reduktionsstufe kann im Batchbetrieb durchgeführt werden. Hierzu wird in einem vorzugsweise mit Tantalblech ausgekleideten Behälter, der einen aus Niob oder Tantal hergestellten Rührer aufweist, das Reduktionsmittel vorgelegt, auf Reduktionstemperatur aufgeheizt, der Rührer in Betrieb gesetzt, und anschließend das Niobpentoxid in kleinen Dosen auf die Schmelze aufgebracht. Im Interesse einer möglichst weitgehenden Reduktion sollte der stöchiometrische Überschuß an Reduktionsmittel im Vergleich zu der Gesamtmenge des eingetragenen Pentoxids mindestens 10 % betragen. Im Interesse der Rührfähigkeit des Inhaltes des Reduktionsreaktors wird vorzugsweise mit einem 25 bis 400 %igen Überschuß an Reduktionsmittel gearbeitet. Insbesondere bevorzugt soll der stöchiometrische Überschuß des Reduktionsmittels 50 bis 200 % betragen. Der Überschuß an Reduktionsmittel kann auch teilweise durch inerte, bei Reduktionstemperatur flüssige Verdünnungssalze wie Natrium- oder Kaliumchlorid oder -fluorid ersetzt werden.

Durch die Wahl des stöchiometrischen Überschusses und gegebenenfalls der Menge des Verdünnungssalzes sowie der Rührgeschwindigkeit läßt sich bei gegebener Batchgröße die Größe und Größenverteilung der Agglomerate des Reduktionsproduktes dieser ersten Stufe und damit auch des nach der zweiten Stufe erhaltenen Metallpulvers steuern. Ein höherer stöchiometrischer Überschuß des reduzierenden Metalls und eine größere Menge an Verdünnungssalz führen zu kleineren Agglomeraten, ebenso eine höhere Rührgeschwindigkeit.

Für den Einsatz für Kondensatoren werden Agglomerate bevorzugt, die einen D₅₀-Wert nach Mastersizer von 50 bis 300 µm aufweisen, wobei der D₉₀-Wert das 1,8-bis 2,5-fache des D₅₀-Wertes betragen kann.

Korrekturen der Agglomeratabmessungen können durch Mahlungen bzw. in der zweiten Reduktionsstufe (Agglomeratvergrößerung) vorgenommen werden.

Nach einer bevorzugten Ausführungsform wird die erste Reduktionsstufe kontinuierlich durchgeführt. Dabei wird die Schmelze des Reduktionsmittels in einem konischen Behälter vorgelegt und kontinuierlich gleichzeitig oder alternierend das Pentoxid und das Reduktionsmittel in die Schmelze dosiert. Aufgrund der höheren Dichte setzen sich das gebildete NbOₓ und Erdalkalioxid in der konischen Spitze des Reaktors ab und können von dort kontinuierlich oder diskontinuierlich abgezogen werden. Je nach Verdichtung des durch die Reduktion entstehenden NbOₓ/MgO-Pulvers in der konischen Spitze wird auch zwischen den Teilchen befindliche Magnesiumschmelze in einer Menge von 25 bis 45 % des NbOₓ/MgO-Pulvervolumens ausgetragen. Demgemäß wird Magnesium entsprechend überstöchiometrisch dosiert.

Als Ausgangsmaterialien für das erfindungsgemäße Verfahren werden vorzugsweise hochreine Niobpentoxide und Reduktionsmittel eingesetzt. Besonders bevorzugte, für die Herstellung von Kondensationen geeignete Niobpulver werden erhalten, wenn ein Niobpentoxid mit einem Gesamt-Fremdmetallgehalt von weniger als 150 ppm eingesetzt werden. Insbesondere bevorzugt soll keines der Verunreinigungsmetalle in einer Menge von mehr als 10 ppm vorhanden sein. Höhere Gehalte an dem als Reduktionsmittel eingesetzten Metall sowie Tantal stören nicht. Erfindungsgemäß können ferner Niob/Tantal-Mischoxide, die aus einer unvollständigen Trennung der beiden Metalle resultieren, eingesetzt werden. Nichtmetallverunreinigungen werden bei der Reduktion regelmäßig weitgehend entfernt. Wesentlich ist jedoch ein geringer Kohlenstoffgehalt des Oxides. Vorzugsweise werden Oxide mit Kohlenstoffgehalten von unter 50 ppm, vorzugsweise unter 10 ppm, eingesetzt.

Auch das Reduktionsmittel wird möglichst hochrein eingesetzt. Allerdings sind die Anforderungen geringer, da beobachtet wurde, daß Einzelmetallverunreinigungen unterhalb 50 ppm nicht oder nur sehr untergeordnet in das NbOₓ bzw. Niobmetall eingebaut werden.

Nach Abkühlung und Säurewaschung erfolgt die Reduktion des NbOₓ zum Metall. Dies kann auf beliebige Weise durchgeführt werden. Bevorzugt wird das NbOₓ-Pulver mit bezogen auf den Restsauerstoffgehalt überstöchiometrischer Menge an Magnesiumspänen versetzt und für einen Zeitraum von 1 bis 4 Stunden, vorzugsweise etwa 2 Stunden, unter Schutzgas auf eine Temperatur von 750 bis 960°C, vorzugsweise etwa 850°C erhitzt.

Anschließend wird auf unter 100°C abgekühlt, allmählicher Sauerstoff-Zutritt zur Desaktivierung gewährleistet und die Säurewaschung wie nach der ersten Reduktionsstufe wiederholt.

Durch Wahl der Temperatur und der Verweilzeit in der zweiten Reduktionsstufe kann die Agglomeratvergrößerung gesteuert werden.

Die zweite Reduktionsstufe kann entweder batchweise oder kontinuierlich im Durchschubofen durchgeführt werden.

Bevorzugt werden die Niobpulver, die für den Einsatz in Elektrolytkatalysatoren vorgesehen sind, mit mindestens einem der Elemente Stickstoff, Phosphor, Bor oder Schwefel dotiert. Dabei kann die Dotierung mit Stickstoff bis zu 20 000 ppm, mit Phosphor bis 1 000 ppm, Bor bis 1 500 ppm und mit Schwefel bis 100 ppm erfolgen. Vorzugsweise beträgt die Dotierung mit Stickstoff mindestens 500 ppm und die Dotierung mit Phosphor mindestens 50 ppm. Die Dotierung wird vorzugsweise so durchgeführt, daß das Niobpulver mit einer vorzugsweise wäßrigen Lösung einer Verbindung, die das Dotierungselement enthält, getränkt wird, das Lösungsmittel durch Trocknen entfernt wird und anschließend das Dotierungselement bei Temperaturen von 750 bis 960°C, vorzugsweise etwa 850°C, während eines Zeitraumes von 1 bis 4 Stunden, reduzierend eindiffundiert. Hierzu werden Magnesiumspäne in 1,1-bis 2,2-fach stöchiometrischer Menge, bezogen auf den oberflächlich gebundenen Sauerstoff des Pulvers, mit dem imprägnierten und getrockneten Pulver vermischt, und auf die Eindiffusionstemperatur unter Inertgas, vorzugsweise Argon, erhitzt. Anschließend wird noch unter Schutzgas auf unter 100°C abgekühlt und erneut durch allmählichen Sauerstoffzutritt passiviert.

Geeignete Verbindungen für die Dotierung sind Phosphor oder Phosphorverbindungen wie Ammoniumphosphat, Ammoniumhydrogenphosphat oder Phosphorsäuren.

Das bei der reduzierenden Eindiffusion der Dotierelemente gebildete Magnesiumoxid und gegebenenfalls überschüssiges Magnesium werden anschließend erneut mit Mineralsäure, insbesondere Schwefelsäure, gegebenenfalls unter Zusatz von Wasserstoffperoxid, gewaschen. Anschließend wird von anhaftender Säure mit Wasser neutral gewaschen und bei mäßiger Temperatur getrocknet.

Zur Erzielung höherer Dotierungen wird der Dotiervorgang gegebenfalls wiederholt.

Nach einer weiter bevorzugten Ausführungsform der Erfindung kann die oder die zusätzliche Behandlung mit Dotiermitteln bereits vor der zweiten Reduktionsstufe erfolgen, so daß die Eindiffusion der Dotiersubstanzen während der zweiten Reduktion erfolgt.

Das Pulver kann auf kleiner 400 µm, vorzugsweise kleiner 300 µm, abgesiebt werden.

Gegenstand der Erfindung sind auch die erfindungsgemäßen Niobpulveragglomerate mit einer Primärkorngröße von 0,1 bis 1 µm Durchmesser und einer Agglomeratdurchmesserverteilung entsprechend D50 nach Mastersizer von 100 bis 300 µm. Insbesondere bevorzugte Agglomeratdurchmesserverteilungen weisen zusätzlich einen D10-Wert nach Mastersizer von 20 bis 70 µm und einen D90-Durchmesser von 250 bis 400 µm auf. Die spezifische Oberfläche liegt bevorzugt im Bereich von 2 bis 15 m²/g nach BET. Die erfindungsgemäßen Pulver weisen nach Herstellung in Labormengen Fremdmetallgehalte (mit Ausnahme von Magnesium und Tantal) von insgesamt weniger als 300 ppm auf. Es wird angenommen, daß bei einer Herstellung im technischen Maßstab die Fremdmetallkontamination noch erheblich reduziert werden kann, so daß erwartet wird, daß nach dem erfindungsgemäßen Verfahren im technischen Maßstab hergestellte Pulver Fremdmetallgehalte von insgesamt weniger als 150 ppm aufweisen. Ebenfalls durch Kontamination im Rahmen der Herstellung im Labormaßstab liegen die Kohlenstoffgehalte der Pulver bei etwa 200 ppm. Bei Herstellung im technischen Umfang sollte auch die Kontamination mit Kohlenstoff erheblich reduziert werden können.

Verfahrensbedingt sind die vergleichsweise hohen Magnesiumgehalte, die zwischen 800 und 10 000 ppm schwanken können. Die Mehrzahl der Pulver zeigt jedoch Magnesiumgehalte von unterhalb 5 000 ppm.

Unschädlich sind die aus der Verwendung von mit Tantal ausgekleideten Reaktoren resultierenden Tantalgehalte zwischen 1 000 und 12 000 ppm.

Der Sauerstoffgehalt liegt in dem für Kondensatoranwendungen gewünschten Bereich von 2 000 bis 5 000 ppm pro m²/g BET-Oberfläche.

Aus den erfindungsgemäßen Niobpulveragglomeraten gelingt es, nach Versinterung bei 1150°C während 20 Minuten bis zu einer Sinterdichte von etwa 5 g/cm³ und Formierung bei 40 Volt Kondensatorkapazitäten von 70 000 bis 380 000 µFV/g bei einer Reststromdichte von 0,5 bis 1,5 nA/µFV (Elektrolyt: 18 %-ige Schwefelsäure) zu erzielen. Unter gleichen Sinterbedingungen werden Elektroden erhalten, die nach Formierung bei 16 Volt eine Kondensatorkapazität von 120 000 bis 250 000 µFV/g und eine Reststromdichte von 0,7 bis 2 nA/µFV aufweisen.

Die Erfindung wird anhand nachfolgender Beispiele näher erläutert:

### Beispiele 1 bis 6

Es wird ein innen mit Tantalblech ausgekleideter zylindrischer Edelstahlbehälter mit einem Innendurchmesser von 145 mm und einem Innenvolumen von 5 l eingesetzt.

Durch den Deckel des Behälters wird zentral ein Rührer aus Tantal geführt. Ferner sind Anschlüsse für Inertgaszufuhr, Inertgasableitung, für den Eintrag von pulverförmigen Material über ein Schleusenrad und für die Einführung eines Thermoelementes vorhanden.

Der zylindrische Behälter mit verschlossenen Deckel (Retorte) wird in einen oben offenen, mit elektrischer Heizung und Kühleinrichtungen versehenen Thermostaten eingesetzt.

Nach Anschluß der Versorgungsleitungen wird die Retorte mit Argon gespült. Durch den Schleusenradeintrag wird die in Tabelle 1 angegebene Menge Mg-Späne eingebracht, und auf Reduktionstemperatur geheizt (Tabelle 1). Sobald das Magnesium geschmolzen ist, wird der Rührer in Gang gesetzt Nach Überschreiten der Reduktionstemperatur um 10 K wird die Heizung abgestellt. Ist die Temperatur auf 20°C unter Reduktionstemperatur abgesunken, werden ca. 10 g Nb₂O₅-Pulver dosiert. Die Temperatur in der Retorte steigt auf 10 bis 25 K über Reduktionstemperatur. Wenn die Temperatur wieder abgesunken ist, wird erneut Nb₂O₅ dosiert. Der Vorgang wird wiederholt bis die in Tabelle 1 angegbene Gesamtmenge Nb₂O₅ dosiert ist. Nach Beendigung der Dosierung wird noch 20 Minuten gerührt.

Dann wird auf Raumtemperatur (< 100°C) abgekühlt. Anschließend wird die Argon-Spülung abgeschaltet, so daß allmählich Luft zutreten kann.

Das Reaktionsgut wird entnommen, abwechselnd in verdünnter Schwefelsäure und Wasser gewaschen und anschließend getrocknet.

Das trockene Material wird auf 400µm abgesiebt.

Das erhaltene NbOₓ weist die Tabelle 1 angegebenen Analysenwerte auf.

**Tabelle 1**

| **Beispiel** | **1** | **2** | **3** | **4** | **5** | **6** |
|---|---|---|---|---|---|---|
| Mg-Späne (g) | 480 | 400 | 342 | 570 | 342 | 342 |
| Red.-Temp. (°C) | 890 | 750 | 750 | 750 | 750 | 750 |
| Nb₂O₅ | 350 | 350 | 600 | 1000 | 600 | 300 |
| NbOₓ: | | | | | | |
| x | 1,44 | 0,97 | 0,65 | 1,28 | 0,98 | 0,74 |
| FSSS¹⁾(µm) | 2,13 | 1,19 | 1,59 | 0,39 | 0,70 | 0,5 |
| SG²⁾(g/inch³) | 16,0 | 11,9 | 17,0 | 12,4 | 18,7 | 14,3 |
| BET³⁾(m²/g) | 32,4 | 50,1 | 24,5 | 59,9 | 8,0 | 18,49 |
| Mastersizer⁴⁾ (µm) | | | | | | |
| D₁₀ | 34,4 | 62,9 | 40,5 | 4,1 | 3,16 | 10,7 |
| D₅₀ | 138,5 | 301,3 | 202,0 | 108,7 | 175,16 | 198,7 |
| D₉₀ | 270,8 | 567,8 | 438,2 | 333,3 | 407,1 | 427,8 |
| Analyse (ppm): | | | | | | |
| C | 120 | 203 | 206 | 208 | 129 | 116 |
| MgO | 9300 | 1660 | 18 250 | 55 600 | 42 800 | 116 |
| Ta | n.b. | 11 200 | 1180 | 7690 | 1500 | 1600 |
| weitere Metalle (Summe) | < 200 | < 200 | < 200 | < 200 | < 200 | < 500 |

| | | | | | | |
|---|---|---|---|---|---|---|
| ¹⁾ Teilchengröße nach Fisher Sub Sieve Sizer | | | | | | |
| ²⁾ Schüttdichte | | | | | | |
| ³⁾ spezifische Oberfläche nach BET | | | | | | |
| ⁴⁾ Teilchengrößenverteilung nach Mastersizer ⁵⁾ visuell aus REM-Aufnahmen | | | | | | |

Je 100 g des erhaltenen NbOₓ wurden mit elementarem Phosphor bzw. NH₄Cl in den in Tabelle 2 angegebenen Mengen versetzt und anschließend in der zweiten Reduktionsstufe unter den in Tabelle 2 angegebenen Bedingungen zum Niobmetall reduziert.

Nach Abkühlung, Desaktivierung und Säurewaschung wurde erneut dotiert (2. Dotierung). Es wurde erneut abgeleitet, desaktiviert, mit Säure gewaschen und getrocknet.

Aus den erhaltenen Niob-Pulvern wurden Testelektroden durch Pressen und Sintern um einen Tantaldraht hergestellt.

Die Elektroden wurden in einer Lösung von 0,25 %iger H₃PO₄ bei 60°C formiert und die Kondensatoreigenschaften in einen Elektrolyten aus 18 %iger H₂SO₄ bei Raumtemperatur bestimmt.

Herstellbedingungen und Kondensatoreigenschaften der Anoden sind in Tabelle 3 dargestellt.

**Tabelle 2**

| **Beispiel** | **1** | **2** | **3** | **4** | **5** | **6** |
|---|---|---|---|---|---|---|
| 1. Dotierung ppm | | | | | | |
| P | 150 | 150 | 150 | 150 | 150 | 150 |
| NH₄Cl | | 10 000 | | | | |
| 2. Reduktion | | | | | | |
| Mg-Späne; (g) | 50 | 30 | 30 | 40 | 30 | 30 |
| Temperatur (°C) | 800 | 800 | 800 | 800 | 800 | 800 |
| Dauer (h) | 2 | 2 | 2 | 2 | 2 | 2 |
| 2. Dotierung ppm P | 50 | 50 | 50 | 50 | 50 | 50 |
| Mg-Späne | 5 | 5 | 5 | 5 | 5 | 5 |
| Temperatur | 800 | 800 | 800 | 800 | 800 | 800 |
| Analyse | | | | | | |
| BET m²/g | 3,53 | 2,03 | 4 | 1,56 | 5,24 | 7,86 |
| Mg ppm | n.b. | 3500 | 1300 | 2200 | 8800 | 7100 |
| O ppm | 56 000 | 14 500 | 20 000 | 15 000 | 30 000 | 45 000 |
| N ppm | n.,b. | >30 000 | n.b. | n.b. | n.b. | n.b. |

**Tabelle 3**

| **Beispiel** | **1** | **2** | **3a** | **3b** | **4** | **5** | **6a** | **6b** |
|---|---|---|---|---|---|---|---|---|
| **Nb-Pulver aus Beispiel** | **1** | **2** | **3** | **3** | **4** | **5** | **5+6** | **6** |
| Sinterbedingungen | | | | | | | | |
| Sinterdichte g/cm³ | 3,39 | 3,65 | 5 | 5 | 3,5 | 3,7 | 3,18 | 3,6 |
| Temperatur °C | 1300 | 1250 | 1250 | 1250 | 1150 | 1150 | 1150 | 1150 |
| Dauer min | 10 | 30 | 20 | 20 | 20 | 20 | 20 | 20 |
| Formierspannung V | 40 | 16 | 40 | 16 | 40 | 16 | 40 | 16 |
| spez. Kapazität µFV/g | 127 028 | 40 518 | 23 043 | 29 725 | 74 622 | 213 804 | 357 664 | 356 521 |
| spez, Reststrom µA/µFV | 6,67 | 1,6 | 2,01 | 2,7 | 4,7 | 0,85 | 0,78 | 1,62 |

### Beispiel 7

### Kontinuierliches Verfahren

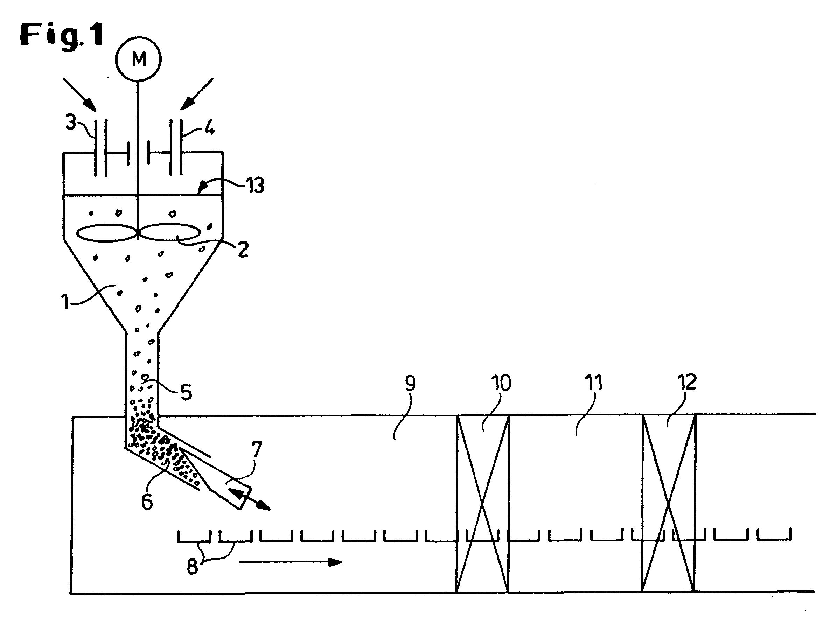

Es wird eine in der beigefügten Fig. 1 schematisch dargestellte Anlage eingesetzt. Die Anlage besteht aus einem konischen Reaktionsbehälter 1, in dem sich ein durch den Motor M angetriebener Rührer 2 befindet. Es sind Einlässe für Niobpentoxid 3 und Magnesium 4 vorgesehen. Ferner sind nicht dargestellte Einlässe für die Schutzgasversorgung vorhanden. An die Spitze des Konus schließt sich ein Sammelrohr 5 an, das ein schräg abgeknicktes Auslaufrohr 6 aufweist. Das Auslaufrohr 6 ist durch den keilförmig angeschnittenen Stopfen 7 verschließbar. Durch Verschiebung des Stopfens 7 in Pfeilrichtung wird ferner die Größe der Austrittsöffnung reguliert, so daß die aus dem Reaktor austretende Menge der Suspension regulierbar ist. Unterhalb des Auslaufrohres 6 befinden sich auf einem Transportband, das in Pfeilrichtung beweglich ist, angeordnete Auffangpfannen 8. Der Raum 9, in dem sich der Auslauf 6 befindet, steht unter Schutzgas. Während die Pfannen durch den Raum 9 transportiert werden, werden diese auf eine Temperatur unterhalb 100°C abgekühlt. Danach durchtreten sie die Schleuse 10. In dem Passivierungsraum 11 befindet sich Schutzgas mit 1 bis 2 % Sauerstoff. Nach Durchtreten der weiteren Schleuse 12 gelangen die Pfannen an die Atmosphäre. Eine technische Anlage weist beispielsweise einen konischen Behälter 1 mit einem Volumen von 12 l auf. Die mit der Magnesiumschmelze (Niveau 13) in Berührung stehende Behälteroberfläche weist eine Fläche von 0,4 m² auf. Sie wird durch Umgebungsluft gekühlt. Es werden kontinuierlich 6,1 kg/h Niobpentoxid und 4,25 kg/h Magnesium eingespeist. Das Niobpentoxidpulver wird im Behälter 1 reduziert und sinkt aufgrund seiner Schwerkraft in das Rohr 5, das einen Durchmesser von 6 cm und eine Länge von 30 cm aufweist, unter Verdrängung von Magnesiumschmelze ab. Am Auslauf 6 werden stündlich 10,45 kg Reduktionsprodukt in die Pfannen 8 abgelassen. Nach Abkühlung, Desaktivierung und Säurewaschung werden täglich 130 kg NbOₓ gewonnen.

## Patentansprüche

1. Verfahren zur Herstellung von Niob- und/oder Tantalpulvern durch Reduktion von entsprechenden Niob- und/oder Tantaloxiden mittels Erdalkalimetallen und/oder Seltenerdmetallen, **dadurch gekennzeichnet ist, daß** die Reduktion bei kontrollierter Temperatur zweistufig durchgeführt wird, wobei die erste Reaktionsstufe bis zu einer mittleren Zusammensetzung (Nb, Ta)Oₓ mit x = 0,5 bis 1,5 durchgeführt wird und vor der zweiten Stufe das Reduktionsprodukt der ersten Stufe durch Waschen mittels Mineralsäuren von gebildeten Erdalkalioxiden und/oder Seltenerdmetalloxiden sowie gegebenenfalls überschüssigem Erdalkalimetall und/oder Seltenerdmetall befreit wird.

2. Verfahren nach Anspruch 1, **dadurch gekennzeichnet, daß** in der ersten Reduktionsstufe die Schmelze des Erdalkalimetalls und/oder Seltenerdmetalls in mindestens 1,25-fachem Überschuß bezogen auf den Sauerstoffgehalt des Niob- und/oder Tantaloxides vorgelegt und das Oxid derart allmählich in die Schmelze dosiert wird, daß die Temperatur der ersten Reduktionsstufe 750°C nicht unterschreitet und 950°C nicht überschreitet.

3. Verfahren nach Anspruch 2, **dadurch gekennzeichnet, daß** Schmelze während der Dosierung des Oxides gerührt wird.

4. Verfahren nach Anspruch 2 bis 3, **dadurch gekennzeichnet, daß** die erste Reduktionsstufe kontinuierlich durch simultane oder alternierende Dosierung von Oxid und reduzierendem Metall in eine vorgelegte Schmelze des reduzierenden Metalls und kontinuierliche oder portionsweise Ausschleusung von Reduktionsprodukt duchgeführt wird.

5. Verfahren nach einem der Ansprüche 1 bis 4, **dadurch gekennzeichnet**, im Anschluß an die erste Reduktionsstufe und/oder die zweite Reduktionsstufe das jeweils erhaltene Reduktionsprodukt mit P-, B-, S-, und/oder N-haltigen Dosiersubstanzen behandelt wird.

6. Verfahren nach einem der Ansprüche 1 bis 5, **dadurch gekennzeichnet, daß** zur Herstellung von Niobpulver Nb₂O₅ als Nioboxid und Magnesium als reduzierendes Metall eingesetzt werden.

7. Niobpulveragglomerate mit einer Primärkorngröße von 0,1 bis 1 µm Durchmesser und einer Agglomeratdurchmesserverteilung entsprechend D50 nach Mastersizer von 100 bis 300 µm.

8. Niobpulveragglomerate nach Anspruch 7 mit einer spezifischen Oberfläche von 2 bis 15 m²/g nach BET.

9. Niobpulveragglomerate nach Anspruch 7 oder 8, die nach Sinterung bei 1150°C während 20 Minuten und Formierung bei 40 Volt eine Kondensatorkapazität von 70 000 bis 360 000 µFV/g und eine Reststromdichte von 0,5 bis 1,5 nA/µFV aufweisen.

10. Niobpulveragglomerate nach Anspruch 7 oder 8, die nach Sinterung bei 1150°C während 20 Minuten und Formierung bei 16 Volt eine Kondensatorkapazität von 120 000 bis 380 000 µFV/g und eine Reststromdichte von 0,7 bis 2 nA/µFV aufweisen.

## Claims

1. Process for the preparation of niobium and/or tantalum powders by reduction of corresponding niobium oxides and/or tantalum oxides by means of alkaline-earth metals and/or rare-earth metals, **characterized in that** the reduction is carried out in two steps at a controlled temperature, with the first reaction step being carried out to an average composition (Nb, Ta)Oₓ, where x = 0.5 to 1.5, and, before the second step, the reduction product from the first step is freed from alkaline-earth metal oxides and/or rare-earth metal oxides formed and any excess alkaline-earth metal and/or rare-earth metal by washing with mineral acids.

2. Process according to Claim 1, **characterized in that**, in the first reduction step, the melt of the alkaline-earth metal and/or rare-earth metal is initially introduced in an at least 1.25-fold excess, based on the oxygen content of the niobium oxide and/or tantalum oxide, and the oxide is gradually metered into the melt in such a way that the temperature in the first reduction step does not fall below 750°C and does not exceed 950°C.

3. Process according to Claim 2, **characterized in that** the melt is stirred during the metering of the oxide.

4. Process according to Claim 2 to 3, **characterized in that** the first reduction step is carried out continuously by simultaneous or alternate metering of oxide and reducing metal in an initially introduced melt of the reducing metal and continuous or portion-wise removal of reduction product from the system.

5. Process according to one of Claims 1 to 4, **characterized in that**, after the first reduction step and/or the second reduction step, the reduction product obtained in each case is treated with P-, B-, S- and/or N-containing metering substances.

6. Process according to one of Claims 1 to 5, **characterized in that**, for the preparation of niobium powder, Nb₂O₅ is employed as niobium oxide and magnesium as reducing metal.

7. Niobium powder agglomerates having a primary particle size of from 0.1 to 1 µm in diameter and an agglomerate diameter distribution, corresponding to D50 according to Mastersizer, of from 100 to 300 µm.

8. Niobium powder agglomerates according to Claim 7 having a specific area of from 2 to 15 m²/g by the BET method.

9. Niobium powder agglomerates according to Claim 7 or 8 which, after sintering at 1150°C for 20 minutes and forming at 40 volts, have a capacitor capacitance of from 70,000 to 360,000 µFV/g and a residual current density of from 0.5 to 1.5 nA/µFV.

10. Niobium powder agglomerates according to Claim 7 or 8 which, after sintering at 1150°C for 20 minutes and forming at 16 volts, have a capacitor capacitance of from 120,000 to 380,000 µFV/g and a residual current density of from 0.7 to 2 nA/µFV.

## Revendications

1. Procédé pour la préparation de poudres de niobium et/ou de tantale par réduction d'oxydes de niobium et/ou de tantale correspondants avec des métaux alcalinoterreux et/ou des métaux de terres rares, **caractérisé en ce que** la réduction est réalisée à température contrôlée en deux étapes, la première étape de la réaction étant réalisée jusqu'à une composition moyenne (Nb,Ta)Oₓ avec x=0,5 à 1,5 et le produit de la réduction de la première étape étant libéré avant la deuxième étape d'oxydes alcalinoterreux et/ou d'oxydes de métaux de terres rares formés ainsi qu'éventuellement de métal alcalinoterreux et/ou de métal de terre rare en excès par lavage avec des acides minéraux.

2. Procédé selon la revendication 1, **caractérisé en ce que** dans la première étape de réduction la masse en fusion du métal alcalinoterreux et/ou du métal de terre rare est disposée préalablement dans un excès d'au moins 1,25 fois rapporté à la teneur en oxygène de l'oxyde de niobium et/ou de tantale et l'oxyde est progressivement dosé dans la masse en fusion de telle sorte que la température de la première étape de réduction n'est pas inférieure à 750°C et n'est pas supérieure à 950°C.

3. Procédé selon la revendication 2, **caractérisé en ce que** la masse en fusion est agitée pendant le dosage de l'oxyde.

4. Procédé selon la revendication 2 à 3, **caractérisé en ce que** la première étape de réduction est réalisée en continu par dosage simultané ou alterné d'oxyde et de métal réducteur dans une masse en fusion du métal réducteur disposée préalablement et par évacuation continue ou par portions du produit de la réduction.

5. Procédé selon l'une quelconque des revendications 1 à 4, **caractérisé en ce que** le produit de la réduction obtenu à chaque fois est traité avec des substances de dosage contenant P, B, S et/ou N à la suite de la première étape de réduction et/ou de la deuxième étape de réduction.

6. Procédé selon l'une quelconque des revendications 1 à 5, **caractérisé en ce que** l'on utilise Nb₂O₅ comme oxyde de niobium et du magnésium comme métal réducteur pour la préparation de poudre de niobium.

7. Agglomérats de poudre de niobium avec une taille de grains primaires d'un diamètre de 0,1 à 1 µm et une distribution de diamètre de l'agglomérat correspondant à D50 selon Mastersizer (dispositif de mesure étalon) de 100 à 300 µm.

8. Agglomérats de poudre de niobium selon la revendication 7 avec une surface spécifique de 2 à 15 m²/g selon BET.

9. Agglomérats de poudre de niobium selon la revendication 7 ou 8, lesquels présentent après frittage à 1150°C pendant 20 minutes et formation à 40 Volt une capacité de condensateur de 70 000 à 360 000 µFV/g et une densité de courant résiduel de 0,5 à 1,5 nA/µFV.

10. Agglomérats de poudre de niobium selon la revendication 7 ou 8, lesquels présentent après frittage à 1150°C pendant 20 minutes et formation à 16 Volt une capacité de condensateur de 120 000 à 380 000 µFV/g et une densité de courant résiduel de 0,7 à 2 nA/µFV.
